# EUROPÄISCHE PATENTSCHRIFT

(11) **EP 3 185 038 B1**
(45) Veröffentlichungstag und Bekanntmachung des Hinweises auf die Patenterteilung: **14.02.2018**
(21) Anmeldenummer: 15202272.9
(22) Anmeldetag: 23.12.2015
(51) Int. Cl.: G01S 17/10, G01S 7/487

(54) **OPTOELEKTRONISCHER SENSOR UND VERFAHREN ZUR MESSUNG EINER ENTFERNUNG**
OPTOELECTRONIC SENSOR AND METHOD FOR MEASURING A DISTANCE
CAPTEUR OPTOELECTRONIQUE ET PROCEDE DE MESURE D'UN ELOIGNEMENT

(43) Veröffentlichungstag der Anmeldung: 28.06.2017
(73) Patentinhaber: SICK AG, 79183 Waldkirch (DE)
(72) Erfinder: Zwölfer, Ulrich, 79183 Waldkirch (DE); Waslowski, Kai, 79183 Waldkirch (DE); Kienzler, Stefan, 79183 Waldkirch (DE); Köhl, Dr. Martin, 79183 Waldkirch (DE)

(56) Entgegenhaltungen:
- US-A- 3 644 043
- US-A1- 2012 075 615
- US-A1- 2012 162 632
- US-A1- 2013 300 838

## Beschreibung

Die Erfindung betrifft einen optoelektronischen Sensor und ein Verfahren zur Messung der Entfernung zu einem Objekt in einem Überwachungsbereich nach dem Oberbegriff von Anspruch 1 beziehungsweise 12. In einem entfernungsmessenden optoelektronischen Sensor wird über die reine Objekterfassung hinaus auch eine Distanz zu dem Objekt bestimmt. Mit Hilfe der Distanzinformation werden auch dreidimensionale Bilder oder sogenannte Tiefenkarten erfasst, wenn der Sensor ortsauflösend ist. Ein Scanner tastet dazu mit einem Lichtstrahl den Überwachungsbereich ab, während eine 3D-Kamera für jedes ihrer Pixel statt oder neben der Helligkeitsinformation auch eine Distanzinformation bestimmt.
Ein herkömmliches Verfahren zur Distanzmessung ist die Lichtlaufzeitmessung. Dabei wird ein kurzer Lichtpuls ausgesandt und die Zeit bis zum Empfang einer Remission oder Reflexion des Lichtpulses gemessen. Um eine höhere Robustheit gegenüber Störereignissen und Rauscheffekten zu gewinnen, ist beispielsweise aus DE 10 2007 013 714 A1 bekannt, nacheinander eine Vielzahl von Einzellichtpulsen auszusenden, die daraufhin erzeugten Empfangssignale in einem Histogramm zu sammeln und anschließend gemeinsam auszuwerten, etwa über eine Suche nach einem Maximum in dem Histogramm, aus dem der Empfangszeitpunkt abgeleitet wird. Das wird auch als Pulsmittelungsverfahren bezeichnet.
Derartige Histogrammauswertungen lösen zwar das Messproblem, benötigen aber viel Speicher, denn die gesamte im Messbereich zu erwartende Lichtlaufzeit wird in Bins unterteilt, deren Breite zumindest in der Nähe der angestrebten Messauflösung liegt. Soll die Entfernungsmessung ortsauflösend sein, wie in einer 3D-Kamera, so skaliert dieser Speicherbedarf noch mit der Anzahl Pixel, oder die Erfassungszeit steigt zur Vermeidung des erhöhten Speicherbedarfs durch sequentielle Verarbeitung der Pixel ganz erheblich an. Besonders hinderlich ist das für die Entwicklung kostengünstiger integrierter Auswertungsbausteine etwa in Form eines ASICs (Application Specific Integrated Circuit). Die zahlreichen Speicherzellen sind bei dem erläuterten Zählvorgang über Histogramme flächenbestimmend und zudem geschwindigkeitslimitierend.

Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet.

Die hohe Empfindlichkeit der SPADs bringt auch Nachteile mit sich, da im Grenzfall schon ein einziges störendes Photon oder internes Rauschereignis das gleiche Signal liefert wie ein ausgeprägtes Nutzsignal. Eine vielfache Messwiederholung und gemeinsame Auswertung ist deshalb gerade bei Verwendung von SPADs sinnvoll.

Die US 2012/0162632 A1 offenbart ein Echtzeitsystem zur optischen Entfernungsmessung. Dabei erzeugt ein TDC Entfernungscodes entsprechend der Laufzeit zwischen Aussenden eines Pulses und dessen Empfang in einem SPAD. Für wiederholte Pulse werden jeweils gleiche Entfernungscodes mit einem CAM (Content Adressable Memory) gezählt, so dass ein Histogramm gemessener Entfernungswerte entsteht, dessen Maximum als Entfernungsmesswert ausgegeben wird.

Die US 3 644 043 offenbart einen integrierten IR-Tracker mit Entfernungsmessung. Dabei werden zunächst in einem Suchmodus die Winkel variiert, in denen IR-Strahlung ausgesandt und wieder empfangen wird. Sobald auf diese Weise ein Ziel erfasst ist, werden in einem Trackingmodus die Winkel zunächst noch etwas grober und dann fein auf einen Winkelbereich beschränkt, und es findet eine laserbasierte Entfernungsmessung statt.

In der US 2013/0300838 A1 wird eine 3D-Szenenerfassung vorgestellt, die auf SPADs basiert. Dabei erfolgt zunächst eine Erfassung mit grober Auflösung, die dann im zweiten Erfassungsschritt auf die volle Auflösung verfeinert wird.
Aus der US 2012/0075615 A1 ist ein weiterer optischer Entfernungsmesser bekannt, der Lichtlaufzeiten in einem Histogramm sammelt und dann das Maximum des Histogramms als Entfernungsmesswert bestimmt.
Es ist deshalb Aufgabe der Erfindung, eine einfachere Auswertung für ein Pulsmittelungsverfahren anzugeben.
Diese Aufgabe wird durch einen optoelektronischen Sensor und ein Verfahren zur Messung der Entfernung zu einem Objekt in einem Überwachungsbereich nach Anspruch 1 beziehungsweise 12 gelöst. Es wird für eine wiederholte Einzelmessung eine Folge von Einzellichtpulsen ausgesandt, wieder empfangen und die jeweilige Einzellichtlautzeit bestimmt, so dass eine entsprechende Folge von Messwerten der Einzelmessungen entsteht. Die Einzelmessungen werden daraufhin akkumuliert ausgewertet, um über einen gemeinsamen Messwert für den Abstand insgesamt eine höhere Genauigkeit zu erzielen. Der Grundgedanke der Erfindung ist dann, durch Rauschereignisse erzeugte Einzellichtlaufzeiten direkt während des Akkumulierens zu erkennen und auszufiltern. Dazu werden beim Akkumulieren nur näherungsweise untereinander gleiche Einzellichtlaufzeiten berücksichtigt. Das fußt auf der Annahme, dass es eine relativ große Anzahl Einzellichtlaufzeiten gibt, die zumindest annähernd dem tatsächlichen Abstand entsprechen, während Rauschereignisse eher singulär auftreten. Insbesondere wird eine Einzellichtlaufzeit nur berücksichtigt, wenn sie mit zumindest einer früheren Einzellichtlaufzeit bis auf eine durch ein Zeitfenster vorgegebene Toleranz übereinstimmt. Die frühere Einzellichtlaufzeit ist beispielsweise der direkte Vorgänger in der Folge, es kann aber auch ein früherer Vorgänger sein beziehungsweise es können mehrere Vorgänger berücksichtigt werden. Die Übereinstimmung kann sich auch auf abgeleitete Größen wie beispielsweise Entfernungswerte beziehen.

Die Erfindung hat den Vorteil, dass nach einem ähnlichen Gedanken wie bei einer Histogrammauswertung eine hohe Messgenauigkeit erreicht wird, ohne jedoch das speicherintensive Histogramm tatsächlich zu bilden. Der Nachteil des hohen Speicherbedarfs entfällt deshalb. Es ist nur ein minimaler Hardwareaufwand erforderlich, mit dem eine schnelle und ohne Weiteres echtzeitfähige Auswertung möglich ist, da die Einzellichtlaufzeiten direkt verarbeitet werden und deshalb nicht mehr im Nachgang ein gesammeltes Histogramm untersucht werden muss.

Die Auswertungseinheit weist bevorzugt einen Akkumulator, insbesondere einen Addierer, zum Aufsummieren von Einzellichtlaufzeiten und einen Zähler für die Anzahl aufsummierter Einzellichtlaufzeiten auf. So werden die zahlreichen Einzellichtlaufzeiten als eine Summe gespeichert und dabei direkt einer gemeinsamen Auswertung zugeführt. Für die Implementierung genügt ein einfacher Addierer mit zwei Registern für Summe und Zählerstand. Der Quotient aus den aufsummierten Einzellichtlaufzeiten und dem Zählerstand bildet den gemeinsamen Messwert. Das gilt für jeden Zählerstand in Form eines Zwischenwerts, wobei der Zähler auch für eine Schwellenbetrachtung genutzt werden kann, um die Messung zu beenden. So wird beispielsweise so lange aufsummiert, bis tausend oder eine beliebige andere vorgegebene Anzahl Einzellichtlaufzeiten aufsummiert wurden.

In der Auswertungseinheit ist bevorzugt ein Zählerstand vorgebbar, ab dem das Filter zusätzlich oder alternativ eine Einzellichtlaufzeit nur dann akkumulieren lässt, wenn sie innerhalb des Zeitfensters mit dem bisherigen gemeinsamen Messwert übereinstimmt. Ab einem Zwischenstand, beispielsweise bei 10% oder irgendeiner anderen Grenze der insgesamt aufzusummierenden Einzellichtlaufzeiten, ändert sich in dieser Ausführungsform das Filterkriterium. Es wird nicht mehr allein die Koinzidenz von Einzellichtlaufzeiten betrachtet, sondern das bisher erreichte Messergebnis fließt zusätzlich ein oder ersetzt dieses Kriterium. Denkbar ist dabei, das bisherige Messergebnis umso stärker zu gewichten, je höher der Zählerstand ist. Wenn Übereinstimmung mit dem Messergebnis innerhalb des Zeitfensters das einzige Kriterium werden soll, kann die Umschaltung mit einem Multiplexer erfolgen.

Das Filter weist bevorzugt mindestens eine Subtrahier-Stufe auf, um eine Betragsdifferenz von Einzellichtlaufzeiten zu bilden und mit dem Zeitfenster zu vergleichen. In dieser Implementierung bildet das Filter vorzugsweise die Differenz der aktuell zu bewertenden Einzellichtlaufzeit mit einer früher erfassten Einzellichtlaufzeit oder einem daraus generierten Referenzwert, und nur wenn der Betrag dieser Differenz in einem Schwellenvergleich klein genug ist, wird die aktuelle Einzellichtlaufzeit akkumuliert. Damit wird das Filter mit sehr einfachen Bauteilen umgesetzt.

Die Auswertungseinheit weist bevorzugt einen Zwischenspeicher für mindestens eine vorhergehende Einzellichtlaufzeit auf. Das Filter kann so auf eine frühere Einzellichtlaufzeit zurückgreifen, um mit der durch das Zeitfenster gegebenen Toleranz übereinstimmende Einzellichtlaufzeiten zu erkennen. Je nach Auslegung von Zwischenspeicher und Filter wird dabei nur eine frühere Einzellichtlaufzeit oder eine längere Historie zwischengespeichert und berücksichtigt.

Der Zwischenspeicher ist bevorzugt als Schiebespeicher für mehrere vorhergehende Einzellichtlaufzeiten ausgebildet, und das Filter lässt eine Einzellichtlaufzeit nur dann akkumulieren, wenn sie mit zumindest einer der gespeicherten vorhergehenden Einzellichtlaufzeiten innerhalb des Zeitfensters übereinstimmt. Die den Schiebespeicher nach und nach durchlaufenden Einzellichtlaufzeiten bilden eine auf sehr einfache Weise gespeicherte Historie. Das Filter weist mehrere Zweige auf, vorzugsweise parallel und so viele wie Speicherplätze im Schiebespeicher, um eine zu bewertende Einzellichtlaufzeit mit den zwischengespeicherten Einzellichtlaufzeiten zu vergleichen. Es wird dann zur Berücksichtigung beim Akkumulieren eine Übereinstimmung mit einer oder mehreren der zwischengespeicherten Einzellichtlaufzeiten gefordert.

Die Auswertungseinheit ist bevorzugt dafür ausgebildet, das Zeitfenster im Verlauf des Akkumulierens von Einzellichtlaufzeiten zu variieren. Vorzugsweise wird das Zeitfenster enger. Die Ausführungsform mit variablem Zeitfenster ist besonders vorteilhaft im Zusammenhang mit einer Umschaltung des Filters auf den bisher bestimmten gemeinsamen Messwert. Das Zeitfenster konvergiert dann auf eine Häufung ähnlicher Einzellichtlaufzeiten, und nachdem dies relativ schnell grob lokalisiert ist, wird über die weiteren Einzellichtlaufzeiten die Genauigkeit erhöht. Dabei würden die durch ein zu grobes Zeitfenster noch berücksichtigten Einzellichtlaufzeiten das erreichte Messergebnis nur noch stören.

Die Auswertungseinheit passt das Zeitfenster bevorzugt an den Zählerstand und/oder die Varianz des gemeinsamen Messwerts an. Eine Anpassung an den Zählerstand entspricht der soeben erläuterten Erwartung, dass ein grober Messwert schnell bestimmt ist. Die Varianz ist ein Maß für die Übereinstimmung der beitragenden Einzellichtlaufzeiten. Ist sie vergleichsweise klein, so darf angenommen werden, dass weiter abliegende Einzellichtlaufzeiten Störereignisse sind, die dann mit zunehmender Schärfe im Verlauf der weiteren Messung ignoriert werden. Da vorzugsweise die Einzellichtlaufzeiten erfindungsgemäß gerade nicht gespeichert werden, sollte für eine Bestimmung der jeweiligen Varianz außer der Summe der Einzellichtlaufzeiten auch eine Summe der quadrierten Einzellichtlaufzeiten akkumuliert werden. Das passende Zeitfenster für einen Zählerstand und/oder eine Varianz kann in einer Funktion oder Tabelle vorgegeben werden.

Die Einzellichtlaufzeitmesseinheit weist bevorzugt einen TDC (Time-to-Digital-Converter) auf. Das ist ein bekanntes und relativ einfaches Bauteil, das mit hoher zeitlicher Auflösung Einzellichtlaufzeiten bestimmen kann. Der TDC wird vorzugsweise zum Sendezeitpunkt gestartet und zum Empfangszeitpunkt durch den empfangenen Einzellichtpuls gestoppt.

Der Lichtempfänger weist bevorzugt eine Vielzahl von Lichtempfangselementen und mehrere den Lichtempfangselementen einzeln oder gruppenweise zugeordnete Einzellichtlaufzeitmesseinheiten auf. Die Lichtempfangselemente sind dabei vorzugsweise linien- oder matrixartig angeordnet. Es gibt dann verschiedene Varianten der Verschaltung. Im einfachsten Fall wird lediglich über alle Lichtempfangselemente gemittelt. Durch zeitliche Mittelung über die Einzellichtpulse und örtliche Mittelung über die Lichtempfangselemente wird dann ein zuverlässigerer Messwert für den Abstand des Objekts bestimmt. Alternativ wird jedes Lichtempfangselement einzeln ausgewertet und ein Messwert für den Abstand des Objekts bestimmt. Das ergibt einen 3D-Bildsensor. In einer Art Mischform werden mehrere Lichtempfangselemente in einer Mittelung zusammengefasst. Auch das ist ein 3D-Bildsensor, dessen Auflösung jedoch gegenüber der Gesamtzahl Lichtempfangselemente vermindert ist und der dafür in seinen effektiven Bildpunkten einen zuverlässigeren Messwert für den Abstand des Objekts liefert.

Die Lichtempfangselemente sind bevorzugt in einem Geiger-Modus betriebene Lawinenphotodioden. Diese auch als SPADs bezeichneten Lichtempfangselemente wurden in der Einleitung schon kurz beschrieben. Die APDs (Avalanche Photo Diode) sind oberhalb ihrer Durchbruchsspannung vorgespannt, und der Lawinenstrom kann schon durch ein einziges Photon ausgelöst werden. SPADs sind daher extrem sensitiv, zugleich aber auch anfällig für Fehlmessungen, denn die Einzellichtlaufzeit kann fehlerhaft auf die Registrierung eines Fremdlichtphotons zurückgehen und dann gänzlich unkorreliert mit dem Abstand des Objekts sein. Aus diesem Grund ist ein statistischer Ansatz mit Fremdereigniserkennung wie die erfindungsgemäße Auswertung von Einzellichtlaufzeiten für SPADs besonders geeignet.

Die Auswertungseinheit ist bevorzugt zumindest teilweise auf dem Lichtempfänger integriert. Beispielsweise ist der Lichtempfänger ein ASIC mit sowohl den Lichtempfangselementen als auch zumindest Teilen der Auswertung. Die Schaltungen für die erfindungsgemäße Auswertung können ausgesprochen einfach ausgelegt werden. Es werden kaum Speicherzellen gebraucht, und deshalb entsteht wenig Flächenbedarf. Das erleichtert die Integration erheblich. Vorzugsweise kann sogar in den Pixeln, also lokal zu jedem Lichtempfangselement oder zu Gruppen von Lichtempfangselementen, eine zugehörige Auswertungsschaltung integriert werden. Diese Auswertungsschaltung kann nur die Einzellichtlaufzeitmesseinheit, aber auch zusätzlich den Akkumulator, Zähler und Filter umfassen. Wegen der einfachen Schaltungen ist dabei ein Füllfaktor, d.h. Verhältnis lichtempfindliche Fläche zu Gesamtfläche des Pixels, von mehr als 20% erreichbar.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Blockdiagramm eines Messkerns zum Bestimmen der Lichtlaufzeit aus einer Folge von Einzellichtpulsen;
- Fig. 2: ein beispielhaftes Histogramm einer Vielzahl mit Einzelpulsen gemessener Lichtlaufzeiten;
- Fig. 3: ein Blockschaltbild einer ersten Ausführungsform einer Auswertungseinheit zur Bestimmung der Lichtlaufzeit aus zumindest annähernd übereinstimmenden Einzelmessungen; und
- Fig. 4: ein Blockschaltbild einer weiteren Ausführungsform zur Bestimmung der Lichtlaufzeit aus zumindest annähernd übereinstimmenden Einzelmessungen mit Betrachtung einer längeren Historie.

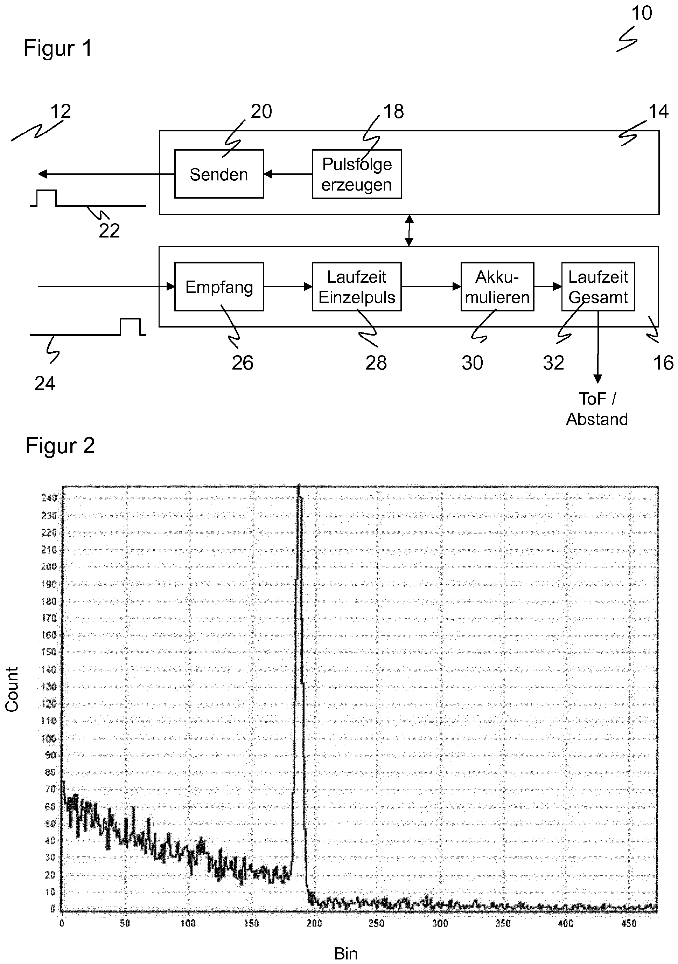

Figur 1 zeigt eine vereinfachte Blockdarstellung eines Messkerns 10 zur Bestimmung des Abstands zu einem Objekt in einem Überwachungsbereich 12 durch Messung von Lichtlaufzeiten. Der Messkern 10 ist in Figur 1 in einen oberen Sendepfad 14 und einen unteren Empfangspfad 16 geteilt. Diese Teilung soll keine technischen Eigenschaften implizieren. Die Erfindung bezieht sich in erster Linie auf den Empfangspfad 16, so dass für den Sendepfad 14 jede bekannte Implementierung denkbar ist. Die Elemente des Sendepfades 14 können eigene Bausteine sein, aber auch mit den Elementen des Empfangspfades 16 auf einem gemeinsamen Baustein integriert werden.

In dem Sendepfad 14 wird mit einem Pulsgenerator 18 eine Folge von kurzen Einzelpulsen erzeugt. Die Pulspausen und -längen können dabei variiert werden, beispielsweise für eine Codierung oder Anpassung an Umgebungsverhältnisse. Für die Belange der Erfindung genügt jedoch die einfachere Vorstellung einer gleichmäßigen Sequenz von Einzelpulsen, die untereinander genügend zeitlichen Abstand haben, um die jeweiligen Messungen nicht zu beeinflussen.

Aus dem elektronischen Sendesignal mit der Pulsfolge erzeugt ein Lichtsender 20, beispielsweise eine LED oder Laserdiode, eine entsprechende Folge von Einzellichtpulsen 22, die in den Überwachungsbereich 12 ausgesandt werden. Treffen die Einzellichtpulse 22 dort auf ein Objekt, so kehrt ein entsprechender reflektierter oder remittierter Einzellichtpuls 24 zu dem Sensor mit dem Messkern 10 zurück und trifft auf den Lichtempfänger 26, der daraus ein elektronisches Empfangssignal erzeugt.

Der Lichtempfänger 26 kann eine einfache Photodiode oder APD sein, ist jedoch bevorzugt SPAD-basiert. Der Lichtempfänger 26 weist mindestens ein Lichtempfangselement auf, insbesondere eine große Anzahl Lichtempfangselemente in Linien- oder Matrixanordnung. Dabei kann die Ortsauflösung erhalten bleiben und so ein 3D-Bildsensor entstehen, oder es erfolgt eine örtliche Mittelung über mehrere oder alle Lichtempfangselemente. Die erfindungsgemäße Auswertung einer Folge von Empfangssignalen aus Einzellichtpulsen ist unabhängig davon, wie diese Ereignisse registriert wurden.

Als ersten Auswertungsschritt bestimmt eine Einzellichtlaufzeitmesseinheit 28 die jeweilige Einzellichtlaufzeit zwischen Aussenden eines Einzellichtpulses 22 und Empfangen des zugehörigen remittierten Einzellichtpulses 24. Die Einzellichtlaufzeitmesseinheit 28 ist beispielsweise ein TDC oder ein Block von TDCs.

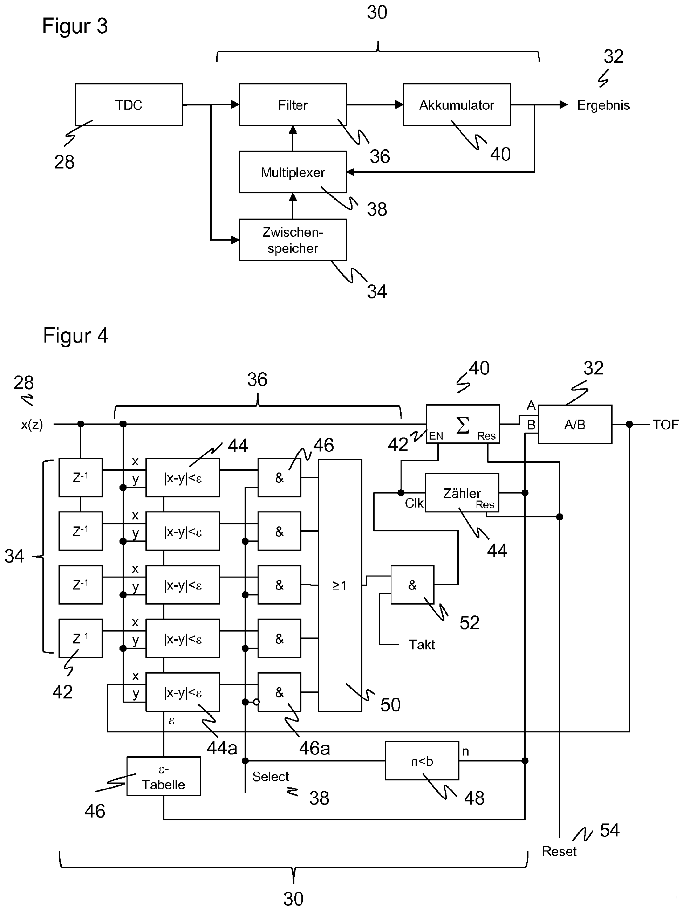

In weiteren Auswertungsschritten werden die Einzellichtlaufzeiten in einem Akkumulator 30 gesammelt. Dabei werden mit Hilfe eines Filters nur bestimmte Einzellichtlaufzeiten berücksichtigt, wie weiter unten anhand der Figuren 3 und 4 genauer erläutert.

Aus den akkumulierten Einzellichtlaufzeiten wird dann in einem Messwertblock 32 zur Bestimmung eines gemeinsamen Messwerts der Abstand zu dem Objekt bestimmt. Dazu wird beispielsweise der Mittelwert gebildet. Übrigens wird in dieser Beschreibung zwischen der Lichtlaufzeit und dem Abstand oft nicht unterschieden, da sie sich über die konstante Lichtgeschwindigkeit nur in der Einheit voneinander unterscheiden.

In einer bevorzugten Ausführungsform ist der Empfangspfad 16 auf einem ASIC integriert. Dabei können eigene Blocks für die Lichtempfangselemente 26 einerseits und die Auswertungsschaltungen 28, 30, 32 andererseits vorgesehen sein. Vorzugsweise sind jedoch zumindest jeweilige Einzellichtlaufzeitmesseinheit 28 direkt bei den Lichtempfangselementen 26 angeordnet und bilden mit einzelnen Lichtempfangselementen 26 oder Gruppen davon intelligente Pixel. Auch der Akkumulator 30 und der Messwertblock 32 können in diese Pixel integriert werden. Eine übergeordnete Steuerung entscheidet dann, ob und wie die Messergebnisse der Pixel ortsaufgelöst genutzt oder nochmals gemittelt werden. In einer weiteren Ausführungsform wird ein FPGA (Field Programmable Gate Array) eingesetzt, auf dem der Akkumulator 30 und/oder der Messwertblock 32 und gegebenenfalls auch die Einzellichtlaufzeitmesseinheit 28 implementiert ist.

Figur 1 zeigt nur den Messkern 10 eines optoelektronischen Sensors. Elemente wie eine Sende- oder Empfangsoptik wurden dabei weggelassen. Der Sensor kann ein einfacher Taster sein, der auf einer Achse den Objektabstand misst. Diese Achse kann durch entsprechende Drehspiegel oder als Messkopf insgesamt zum Rotieren gebracht werden und bildet dann einen Scanner. Eine weitere beispielhafte Ausführungsform des Sensors ist eine 3D-Kamera.

Figur 2 zeigt ein beispielhaftes Histogramm eine Vielzahl von beispielsweise tausend Einzellichtlaufzeiten. Dabei sind die Bins auf der X-Achse Zeitintervalle möglicher Lichtlaufzeiten, hier in beliebigen Einheiten, während die Y-Achse die zugehörige Anzahl erfasster Einzellichtlaufzeiten darstellt. Das Histogramm ist also insgesamt eine Verteilung der gemessenen Einzellichtlaufzeiten.

Das Histogramm zeigt ein eindeutiges Maximum, das mit bloßem Auge ungefähr im 175. Bin erkannt wird und sich klar von störenden, von Umgebungslicht und anderen Störeffekten verursachten Einzellichtlaufzeiten abhebt. Das Maximum könnte mit einem Algorithmus lokalisiert und daraus der Abstand des Objekts ermittelt werden. Allerdings erfordert das erheblichen Speicherbedarf für das Histogramm, besonders wenn man sich vorstellt, dass ein derartiges Histogramm in einem 3D-Bildsensor für jedes Pixel gespeichert werden müsste.

Erfindungsgemäß wird deshalb ein Histogramm wie in Figur 2 dargestellt gerade nicht aufgebaut und gespeichert. Vielmehr basiert die Auswertung darauf, dass sich die Einzellichtlaufzeiten in der Nähe des Maximums häufen und Messereignisse von Störereignissen mit Hilfe eines aus dieser Erkenntnis abgeleiteten Filterkriteriums auch schon während der Erfassung von Einzellichtlaufzeiten unterschieden werden können.

Figur 3 zeigt ein Blockschaltbild der Auswertung im Empfangspfad 16 in einer ersten Ausführungsform. Als Einzellichtlaufzeitmesseinheit 28 dient hier ein TDC. Darüber werden sequentiell digitale Einzellichtlaufzeiten aus den Einzelmessungen zur Verfügung gestellt. Der TDC wird durch das Aussenden des Einzellichtpulses 22 gestartet und bei Empfang des remittierten Einzellichtpulses 24 gestoppt und bestimmt die verstrichene Zeit beispielsweise mit einer Art Zähler, basierend auf einem sehr hochfrequenten Takt von beispielsweise 20 GHz. Entsprechende TDC-Architekturen sind an sich in der Literatur bekannt.

Eine gemessene Einzellichtlaufzeit wird von der Einzellichtlaufzeitmesseinheit 28 an einen Zwischenspeicher 34 und an ein Filter 36 übergeben. Der Zwischenspeicher 34 merkt sich mindestens eine frühere Einzellichtlaufzeit als Referenzwert, beispielsweise die jeweils zuletzt übergebene Einzellichtlaufzeit oder eine Historie von mehreren früheren Einzellichtlaufzeiten. Der Zwischenspeicher 34 ist über einen Multiplexer 38 ebenfalls an das Filter 36 angeschlossen.

Das Filter 36 entscheidet anhand eines Vergleichs der aktuell gemessenen Einzellichtlaufzeit mit einem oder mehreren Referenzwerten aus dem Zwischenspeicher 34, ob die gemessene Einzellichtlaufzeit innerhalb eines Zeitfensters mit mindestens einer früher gemessenen Einzellichtlaufzeit übereinstimmt und an einen an das Filter angeschlossenen Akkumulator 40 weitergegeben wird oder ob sie als singuläres Störereignis verworfen wird.

In dem Akkumulator 40 werden diejenigen Einzellichtlaufzeiten, die das Filter 36 erfolgreich passiert haben, aufsummiert und gezählt. Daraus wird dann der Abstand zu dem Objekt als Ergebnis berechnet, etwa durch Mittelwertbildung. Dieses Ergebnis kann außerdem als weiterer Referenzwert über den Multiplexer 38 dem Filter 36 übergeben werden.

Das Messverfahren in dem Empfangspfad 16 gemäß Figur 3 läuft dann beispielsweise wie folgt ab. Zu Beginn der Messung wird der Akkumulator samt Zähler auf Null zurückgesetzt. Zumindest die erste Einzellichtlaufzeit wird lediglich in dem Zwischenspeicher 34 abgelegt, je nach Filterkriterien wird zu dessen Initialisierung auch eine größere Anzahl anfänglicher Einzellichtlaufzeiten benötigt.

Sobald der Zwischenspeicher 34 ausreichend gefüllt ist, wird die nächste Einzellichtlaufzeit mit dessen Referenzwerten verglichen. Beispielsweise wird dazu die Betragsdifferenz gebildet und mit einer Schwelle verglichen. Nur wenn die zu bewertende Einzellichtlaufzeit nahe genug an der als Referenzwert gespeicherten Einzellichtlaufzeit liegt, wird sie weitergegeben. Alternativ wird mit n gespeicherten Einzellichtlaufzeiten verglichen und eine ausreichende Übereinstimmung in m, m ≤ n, dieser Vergleiche gefordert. Der Multiplexer 38 verbindet in dieser ersten Messphase den Zwischenspeicher 34 mit dem Filter 36.

Eine Einzellichtlaufzeit, die das Filter 36 nicht als singuläres Störereignis verwirft und demnach an den Akkumulator 40 weitergibt, wird dort aufsummiert und zugleich der Zähler erhöht. Als Zwischenergebnis wird am Ausgang des Akkumulators der bisher bestimmte Mittelwert bereitgestellt.

Die erste Messphase endet bei einem bestimmten Zählerstand, beispielsweise nachdem hundert Einzellichtlaufzeiten akkumuliert wurden. Dann schaltet der Multiplexer 38 um und übergibt nun das Zwischenergebnis des Messwerts für den Abstand zu dem Objekt als Referenzwert an das Filter 36. Dieses Zwischenergebnis kann in der folgenden zweiten Messphase der einzige Referenzwert sein oder zusätzlich zu der Historie aus dem Zwischenspeicher 34 berücksichtigt werden. Das Filter 36 arbeitet ansonsten wie zuvor und vergleicht, ob eine zu bewertende Einzellichtlaufzeit nahe genug an den Referenzwerten liegt.

Bei einem weiteren bestimmten Zählerstand, beispielsweise nachdem tausend Einzellichtlaufzeiten akkumuliert wurden, ist die Messung beendet, und das Ergebnis steht am Ausgang des Akkumulators 40 bereit. Es wird möglicherweise noch über die Lichtgeschwindigkeit in eine für den Abstand geläufigere Einheit umgerechnet.

Es ist denkbar, auf den Multiplexer 38 zu verzichten und während der gesamten Messung wie in der ersten Messphase nur die Einzellichtlaufzeiten untereinander zu vergleichen. Eine weitere Variante besteht darin, die Schwelle in dem Filter 36 nicht statisch zu wählen, sondern dynamisch anzupassen, insbesondere enger werdend als feste Funktion oder Tabelle in Abhängigkeit von dem Zählerstand in dem Akkumulator 40 oder abhängig von der Standardabweichung der bereits gefilterten beziehungsweise akkumulierten Einzellichtlaufzeiten.

Für die Implementierung dieses Verfahrens genügt ein minimaler Hardwareaufwand. Das Filter 36 kann als Subtrahier-Stufe zur Bildung von Differenz und Betrag, der Akkumulator 40 als Addierer mit zwei Registern für Summe und Zählerstand, der Zwischenspeicher 34 aus nur einem Register und der Multiplexer 38 als Gatterlogik implementiert werden. Weist beispielsweise der TDC der Einzellichtlaufzeitmesseinheit 28 eine Bitbreite von b=10 auf und werden n=1024 Einzellichtlaufzeiten verarbeitet, dann würde ein Histogrammverfahren 2^{b} In(n)/ln(2) = 10240 1-Bit-Register verbrauchen. Erfindungsgemäß genügen 2 (b+ln(n)/ln(2)) = 40 1-Bit-Register.

Figur 4 zeigt ein Blockschaltbild einer weiteren Ausführungsform der Auswertung im Empfangspfad 16. Dabei sind die in Figur 3 gezeigten Elemente weiterhin vorhanden und mit gleichen Bezugszeichen gekennzeichnet, jedoch für eine Lösung mit Berücksichtigung einer Historie von beispielhaft den vier jüngsten zurückliegenden Ereignissen detaillierter ausgestaltet.

Die Eingangsgröße sind weiterhin die von der Einzellichtlaufzeitmesseinheit 28 kommenden Ereignisse x(z). Sie werden in dem als Schiebespeicher mit Schieberegistern 42 ausgebildeten Zwischenspeicher 34 abgelegt. Die Schieberegister enthalten demnach eine Historie der vier zuletzt übergebenen Einzellichtlaufzeiten.

Das Filter 36 weist insgesamt fünf Subtrahier-Stufen 44 auf. Die oberen vier dieser Subtrahier-Stufen 44 erhalten als Eingänge jeweils einen Referenzwert aus dem Zwischenspeicher 34 sowie die aktuelle Einzellichtlaufzeit von der Einzellichtlaufzeitmesseinheit 28. Die unterste Subtrahier-Stufe 44a unterscheidet sich dadurch, dass ihr als Referenzwert das Zwischenergebnis des Akkumulators 40 zugeführt wird. Die Betragsdifferenz wird mit einer Schwelle ε verglichen, um festzustellen, ob Einzellichtlaufzeit und Referenzwert in dem vorgegebenen Zeitfenster liegen. Dabei muss die Schwelle ε nicht fix sein, sondern kann aus der Tabelle 46 entnommen und beispielsweise mit zunehmendem Zählerstand n in dem Akkumulator 40 oder der Varianz des dort bisher ermittelten gemeinsamen Messwerts variieren.

Die Ausgänge der Subtrahier-Stufen 44, 44a werden jeweils auf einen Eingang eines UND-Gatters 46 gelegt. Der andere Eingang ist über den Multiplexer 38 in der ersten Messphase EINS und wird in der zweiten Messphase NULL. Der Wechsel zwischen den Messphasen wird in einem Messphasenvergleicher 48 dadurch bestimmt, dass der Zählerstand n eine vorgegebene Schwelle b erreicht oder übertroffen hat. Zu beachten ist die Invertierung am zweiten Eingang des untersten UND-Gatters 46a. Dadurch wird erreicht, dass in der ersten Messphase die Einzellichtlaufzeiten aus dem Zwischenspeicher 34 und später das Zwischenergebnis des Akkumulators 40 als Referenzwert berücksichtigt werden.

Die Ausgänge der UND-Gatter 46 sind auf die Eingänge eines Filtervergleichers 50 gelegt, der prüft, ob mindestens ein Eingang EINS ist und damit anzeigt, dass die Einzellichtlaufzeit mit zumindest einem Referenzwert ausreichend gut übereinstimmt. Hier kann zumindest in der ersten Messphase auch ein schärferes Kriterium ≥ m gewählt werden.

Der Ausgang des Filtervergleichers 50 wird mit einem Eingang eines weiteren UND-Gatters 52 verbunden, dessen anderer Eingang einen der Folge der Einzellichtpulse entsprechenden Takt erhält. Der Takt wird deshalb als Ergebnis des Filters 36 von dem weiteren UND-Gatter 52 genau dann an einen Enable-Eingang eines Addierers 42 und an einen Zähler 44 des Akkumulators 40 weitergegeben, wenn die Einzellichtlaufzeit innerhalb des durch ε vorgegebenen Zeitfensters mit dem Referenzwert übereinstimmt. Es werden deshalb nur Einzellichtlaufzeiten aufsummiert und gezählt, die das Filter 36 selektiert.

Der Messwertblock 32 bestimmt abschließend den jeweiligen Mittelwert als Quotient der aufsummierten Einzellichtlaufzeiten des Addierers 42 und des Zählerstandes des Zählers 44. Ein Vergleich des Zählerstandes mit einem Abbruchkriterium für das Ende der Messung nach beispielsweise tausend Einzelmessungen ist nicht darstellt. Über einen Reset 54 kann der Akkumulator 40 für eine neue Messung zurückgesetzt werden.

## Patentansprüche

1. Optoelektronischer Sensor zur Messung der Entfernung zu einem Objekt in einem Überwachungsbereich (12), der einen Lichtsender (20) zum Aussenden einer Folge von Einzellichtpulsen (22) in den Überwachungsbereich (12), einen Lichtempfänger (26) mit mindestens einem Lichtempfangselement zum Empfang der von dem Objekt reflektierten oder remittierten Einzellichtpulse (24), eine Einzellichtlaufzeitmesseinheit (28) zur Bestimmung einer Folge von Einzellichtlaufzeiten der Einzellichtpulse (22, 24) als Dauer zwischen einem Sendezeitpunkt des jeweiligen Einzellichtpulses (22) und dessen von dem Lichtempfangselement (26) erfassten Empfangszeitpunkt sowie eine Auswertungseinheit (30, 32) aufweist, die dafür ausgebildet ist, Einzellichtlaufzeiten zu akkumulieren und daraus einen gemeinsamen Messwert für den Abstand zu bestimmen, **dadurch gekennzeichnet,**
**dass** die Auswertungseinheit (30) einen Zwischenspeicher (34), der sich mindestens eine vorhergehende Einzellichtlaufzeit als Referenzwert merkt, und ein Filter (36) aufweist, um eine Einzellichtlaufzeit nur dann zu akkumulieren, wenn ein Vergleich mit einem in dem Zwischenspeicher (34) gespeicherten Referenzwert ergibt, dass sie innerhalb eines Zeitfensters mit einer vorhergehenden Einzellichtlaufzeit übereinstimmt, und die Einzellichtlaufzeit andernfalls als singuläres Störereignis zu verwerfen.

2. Sensor nach Anspruch 1,
wobei die Auswertungseinheit (30) einen Akkumulator (40), insbesondere einen Addierer (42), zum Aufsummieren von Einzellichtlaufzeiten und einen Zähler (44) für die Anzahl aufsummierter Einzellichtlaufzeiten aufweist.

3. Sensor nach Anspruch 2,
wobei in der Auswertungseinheit (30) ein Zählerstand vorgebbar ist, ab dem das Filter (36) zusätzlich oder alternativ eine Einzellichtlaufzeit nur dann akkumulieren lässt, wenn sie innerhalb des Zeitfensters mit dem bisherigen gemeinsamen Messwert übereinstimmt.

4. Sensor nach einem der vorhergehenden Ansprüche,
wobei das Filter (36) mindestens eine Subtrahier-Stufe (44) aufweist, um eine Betragsdifferenz von Einzellichtlaufzeiten zu bilden und mit dem Zeitfenster zu vergleichen.

5. Sensor nach Anspruch 1 wobei der Zwischenspeicher (34) als Schiebespeicher (42) für mehrere vorhergehende Einzellichtlaufzeiten ausgebildet ist und das Filter (36) eine Einzellichtlaufzeit nur dann akkumulieren lässt, wenn sie mit zumindest einer der gespeicherten vorhergehenden Einzellichtlaufzeiten innerhalb des Zeitfensters übereinstimmt.

6. Sensor nach einem der vorhergehenden Ansprüche,
wobei die Auswertungseinheit (30, 46) dafür ausgebildet ist, das Zeitfenster im Verlauf des Akkumulierens von Einzellichtlaufzeiten zu variieren.

7. Sensor nach Anspruch 6 wobei die Auswertungseinheit (30, 46) das Zeitfenster an den Zählerstand und/oder die Varianz des gemeinsamen Messwerts anpasst.

8. Sensor nach einem der vorhergehenden Ansprüche,
wobei die Einzellichtlaufzeitmesseinheit (28) einen TDC aufweist.

9. Sensor nach einem der vorhergehenden Ansprüche,
wobei der Lichtempfänger (26) eine Vielzahl von Lichtempfangselementen und mehrere den Lichtempfangselementen einzeln oder gruppenweise zugeordnete Einzellichtlaufzeitmesseinheiten (28) aufweist.

10. Sensor nach einem der vorhergehenden Ansprüche,
wobei die Lichtempfangselemente in einem Geiger-Modus betriebene Lawinenphotodioden sind.

11. Sensor nach einem der vorhergehenden Ansprüche,
wobei die Auswertungseinheit (30) zumindest teilweise auf dem Lichtempfänger (26), insbesondere zu jedem Lichtempfangselement oder Gruppen von Lichtempfangselementen, integriert ist.

12. Verfahren zur Messung der Entfernung zu einem Objekt in einem Überwachungsbereich (12), bei dem eine Folge von Einzellichtpulsen (22) in den Überwachungsbereich (12) ausgesandt wird, die von dem Objekt reflektierten oder remittierten Einzellichtpulse (24) wieder empfangen werden, eine Folge von Einzellichtlaufzeiten der Einzellichtpulse (22, 24) als Dauer zwischen einem Sendezeitpunkt des jeweiligen Einzellichtpulses (22) und dessen Empfangszeitpunkt bestimmt wird, die Einzellichtlaufzeiten akkumuliert werden und daraus ein gemeinsamer Messwert für den Abstand bestimmt wird,
**dadurch gekennzeichnet,**
**dass** mindestens eine vorhergehende Einzellichtlaufzeit als Referenzwert in einem Zwischenspeicher (34) abgelegt und mit Hilfe eines Filters (36) eine Einzellichtlaufzeit nur dann akkumuliert wird, wenn ein Vergleich mit einem in dem Zwischenspeicher (34) gespeicherten Referenzwert ergibt, dass sie innerhalb eines Zeitfensters mit einer vorhergehenden Einzellichtlaufzeit übereinstimmt, und die Einzellichtlaufzeit andernfalls als singuläres Störereignis verworfen wird.

## Claims

1. An optoelectronic sensor for measuring a distance to an object in a monitoring region (12), the sensor comprising a light transmitter (20) for transmitting a sequence of individual light pulses (22) into the monitoring region (12), a light receiver (26) having at least one light reception element for receiving the individual light pulses (24) reflected or remitted by the object, an individual time of flight measuring unit (28) for determining a sequence of individual times of flight of the individual light pulses (22, 24) as a duration between a transmission point in time of a respective individual light pulse (22) and its reception point in time detected by the light reception element (26), and an evaluation unit (30, 32) for accumulating individual times of flight and for determining a common measurement value for the distance from that,
**characterized in that** the evaluation unit (30) comprises a buffer memory (34), which stores at least one previous individual time of flight as a reference value, and a filter (36) for accumulating an individual time of flight only if a comparison with a reference value stored in the buffer memory (34) results, within a time window, in a coincidence of the individual time of flight and a previous individual time of flight, and **in that** die individual time of flight otherwise is discarded as a singular interference event.

2. The sensor according to claim 1,
wherein the evaluation unit (30) comprises an accumulator (40), in particular an adder (42), for adding up individual times of flight, and a counter (44) for counting the number of added individual times of flight.

3. The sensor according to claim 2,
wherein a count can be set in the evaluation unit (30) from which on the filter (36), additionally or as an alternative, only allows accumulation of an individual time of flight if it coincides, within the time window, with the current common measurement value.

4. The sensor according to one of the preceding claims,
wherein the filter (36) comprises at least one subtracting stage (44) for forming an absolute difference of individual times of flight and comparing the absolute difference with the time window.

5. The sensor according to claim 1,
wherein the buffer memory (34) is configured as a sliding memory (42) for a plurality of previous individual times of flight, and wherein the filter (36) only allows accumulation of an individual time of flight if it coincides, within the time window, with at least one of the stored previous individual times of flight.

6. The sensor according to one of the preceding claims,
wherein the evaluation unit (30, 46) is configured to vary the time window during the accumulation of individual times of flight.

7. The sensor according to claim 6,
wherein the evaluation unit (30, 46) is configured to adapt the time window to the number of accumulated individual light pulses and/or the variance of the common measurement value.

8. The sensor according to one of the preceding claims,
wherein the individual time of flight measuring unit (28) comprises a TDC.

9. The sensor according to one of the preceding claims,
wherein the light receiver (26) comprises a plurality of light reception elements and a plurality of individual time of flight measuring units (28) assigned to the light reception elements individually or in groups.

10. The sensor according to one of the preceding claims,
wherein the at least one light reception element is an avalanche photodiode operated in a Geiger mode.

11. The sensor according to one of the preceding claims,
wherein the evaluation unit (30) is at least partially integrated on the light receiver (26), in particular together with each light reception element or groups of light reception elements.

12. A method for measuring a distance to an object in a monitoring region (12), wherein a sequence of individual light pulses (22) is transmitted into the monitoring region (12), the individual light pulses (24) reflected or remitted by the object are received, a sequence of individual times of flight of the individual light pulses (22, 24) is determined as a duration between a transmission point in time of a respective individual light pulse (22) and its reception point in time, the individual times of flight are accumulated and a common measurement value for the distance is determined from that,
**characterized in that** at least one previous individual time of flight is stored in a buffer memory (34) as a reference value and, by means of a filter (36), an individual time of flight is accumulated only if a comparison with a reference value stored in the buffer memory (34) results, within a time window, in a coincidence of the individual time of flight and a previous individual time of flight, and **in that** die individual time of flight otherwise is discarded as a singular interference event.

## Revendications

1. Capteur optoélectronique pour mesurer la distance d'un objet dans une zone à surveiller (12), qui comprend un émetteur de lumière (20) pour émettre une succession d'impulsions lumineuses individuelles (22) dans la zone à surveiller (12), un récepteur de lumière (26) comportant au moins un élément de réception de lumière pour recevoir les impulsions lumineuses individuelles (24) réfléchies ou réémises par l'objet, une unité (28) de mesure du temps de parcours de la lumière individuelle pour déterminer une succession de temps de parcours de lumière individuelle des impulsions lumineuses individuelles (22, 24) en tant que durée entre un instant d'émission de l'impulsion lumineuse individuelle respective (22) et son instant de réception détecté par l'élément de réception de lumière (26), ainsi qu'une unité d'évaluation (30, 32) conçue pour accumuler des temps de parcours de lumière individuelle et pour en déterminer une valeur de mesure commune pour la distance,
**caractérisé en ce que**
l'unité d'évaluation (30) comprend une mémoire intermédiaire (34) qui mémorise à titre de valeur de référence au moins un temps de parcours de lumière individuelle précédent, et un filtre (36) pour n'accumuler un temps de parcours de lumière individuelle que lorsqu'une comparaison avec une valeur de référence mémorisée dans la mémoire intermédiaire (34) indique qu'il coïncide avec un temps de parcours de lumière individuelle précédent à l'intérieur d'une fenêtre de temps, et sinon pour rejeter le temps de parcours de lumière individuelle à titre d'événement perturbateur singulier.

2. Capteur selon la revendication 1,
dans lequel l'unité d'évaluation (30) comprend un accumulateur (40), en particulier un additionneur (42) pour sommer des temps de parcours de lumière individuelle et un compteur (44) pour le nombre de temps de parcours de lumière individuelle sommés.

3. Capteur selon la revendication 2,
dans lequel une valeur de compteur peut être définie dans l'unité d'évaluation (30), à partir de laquelle le filtre (36) ne fait accumuler en supplément ou en variante un temps de parcours de lumière individuelle que lorsqu'il coïncide avec la valeur de mesure commune actuelle à l'intérieur de la fenêtre de temps.

4. Capteur selon l'une des revendications précédentes,
dans lequel le filtre (36) comprend au moins un étage de soustraction (44) pour former une différence de valeur absolue entre les temps de parcours de lumière individuelle et pour la comparer à la fenêtre de temps.

5. Capteur selon la revendication 1,
dans lequel la mémoire intermédiaire (34) est réalisée sous forme de mémoire à décalage (42) pour plusieurs temps de parcours de lumière individuelle précédents, et le filtre (36) ne fait accumuler un temps de parcours de lumière individuelle que lorsqu'il coïncide avec l'un au moins des temps de parcours de lumière individuelle précédents mémorisés à l'intérieur de la fenêtre de temps.

6. Capteur selon l'une des revendications précédentes,
dans lequel l'unité d'évaluation (30, 46) est réalisée pour varier la fenêtre de temps pendant l'accumulation de temps de parcours de lumière individuelle.

7. Capteur selon la revendication 6,
dans lequel l'unité d'évaluation (30, 46) adapte la fenêtre de temps à la valeur de comptage et/ou à la variance de la valeur de mesure commune.

8. Capteur selon l'une des revendications précédentes,
dans lequel l'unité de mesure de temps de parcours de lumière individuelle (28) comprend un TDC.

9. Capteur selon l'une des revendications précédentes,
dans lequel le récepteur de lumière (26) comprend une multitude d'éléments de réception de lumière et plusieurs unités de mesure de temps de parcours de lumière individuelle (28) associées individuellement ou par groupe aux éléments de réception de lumière.

10. Capteur selon l'une des revendications précédentes,
dans lequel les éléments de réception de lumière sont des photodiodes à avalanche qui fonctionnent en mode Geiger.

11. Capteur selon l'une des revendications précédentes,
dans lequel l'unité d'évaluation (30) est intégrée au moins partiellement sur le récepteur de lumière (26), en particulier pour chaque élément de réception de lumière ou pour des groupes d'éléments de réception de lumière.

12. Procédé de mesure de la distance d'un objet dans une zone à surveiller (12), dans lequel on émet une succession d'impulsions lumineuses individuelles (22) dans la zone à surveiller (12), on reçoit les impulsions lumineuses individuelles (24) réfléchies ou réémises par l'objet, on détermine une succession de temps de parcours de lumière individuelle des impulsions lumineuses individuelles (22, 24) en tant que durée entre un instant d'émission de l'impulsion lumineuse individuelle respective (22) et son instant de réception, on accumule les temps de parcours de lumière individuelle et on en détermine une valeur de mesure commune pour la distance,
**caractérisé en ce que**
on mémorise au moins un temps de parcours de lumière individuelle précédent à titre de valeur de référence dans une mémoire intermédiaire (34), et à l'aide d'un filtre (36) on n'accumule un temps de parcours de lumière individuelle que lorsqu'une comparaison avec une valeur de référence mémorisée dans la mémoire intermédiaire (34) indique qu'il coïncide avec un temps de parcours de lumière individuelle précédent à l'intérieur d'une fenêtre de temps, et sinon on rejette le temps de parcours de lumière individuelle à titre d'événement perturbateur singulier.
